# EUROPÄISCHE PATENTANMELDUNG

(11) **EP 1 980 760 A2**
(43) Veröffentlichungstag der Anmeldung: **15.10.2008**
(21) Anmeldenummer: 08003090.1
(22) Anmeldetag: 20.02.2008
(51) Int. Cl.: F16C 3/00, F16H 7/12

(54) **Laufrolle mit abgeschwächtem Anregungsverhalten**

(30) Priorität: 13.04.2007 DE 102007017882
(71) Anmelder: Muhr und Bender KG, 57489 Attendorn (DE)
(72) Erfinder: Jung, Manfred, Dipl.-Ing., 56457 Westerburg (DE); Schebitz, Michael, Dipl.-Ing., 57349 Attendorn (DE); Zacker, Matthias, Dipl.-Ing., 57439 Attendorn (DE)
(74) Vertreter: Neumann, Ernst Dieter

(57) **Zusammenfassung**

Laufrolle 11 für Riemenspannsysteme oder Umschlingungsgetriebe mit einer Hohlnabe 12 und einem zylindrischen Laufring 13, wobei Hohlnabe 12 und Laufring 13 durch einen Ringsteg 14 miteinander verbunden sind und die Hohlnabe 12 und der Laufring 13 beiderseits des Ringstegs 14 durch umfangsverteilte radial angeordnete Rippen 17, 18 gegeneinander abgestützt sind, wobei die Anzahl der Rippen 17, 18 auf beiden Seiten des Ringstegs 14 jeweils durch eine Primzahl gebildet wird und/oder die Rippen 17, 18 auf beiden Seiten des Ringstegs 14 zueinander nicht-mittig umfangsversetzt sind und/oder ihre Anzahl auf beiden Seiten des Ringstegs 14 voneinander abweicht und/oder die Rippenanordnung variable Teilungswinkel über dem Umfang hat.

## Beschreibung

Die Erfindung betrifft eine Laufrolle für Riemenspannsysteme oder Umschlingungsgetriebe mit einer Hohlnabe zur Aufnahme eines Lagers und einem zylindrischen Laufring mit einer Lauffläche zum Abwälzen eines umschlingenden Riemens, wobei Hohlnabe und Laufring durch einen Ringsteg miteinander verbunden sind und die Hohlnabe und der Laufring beiderseits des Ringstegs durch umfangsverteilte radial angeordnete Rippen gegeneinander abgestützt sind. Derartige Laufrollen werden als homogene Spitzgußteile aus Kunststoffmaterial hergestellt und sind damit leicht und kostengünstig. Dies ist bedeutsam, da sie Teile von schwingungsfähigen Systemen sind; im übrigen hat das verwendete Kunststoffmaterial günstige akustische Eigenschaften. Beim Spritzgießen wird die Laufrolle über eine Mehrzahl von Angießpunkten gespritzt, die z. B. an der Hohlnabe umfangsverteilt angeordnet sind. Die bekannte Konstruktion mit den genannten Rippen dient bei leichter Ausführung der Gestaltfestigkeit. Hierbei soll vermieden werden, daß sich der Laufring unter der Kraft des darüber gespannten Riemens ballig verformt, da dies zu erhöhtem Verschleiß am Riemen und zur Ermüdung der Rolle führen könnte.

Wenn die als Kunststoffspritzgußteile hergestellten Laufrollen entformt werden, kommt es beim Erkalten und Aushärten zu einem Schrumpfungsprozeß, der von der Materialverteilung über dem Umfang abhängig ist, wobei die Rippen Materialanhäufungen darstellen, die einer geringeren Schrumpfung unterliegen, als der freie Laufring, so daß im Endergebnis der Laufring in achsnormalem Schnitt durch die Drehachse ein Vieleck darstellt bzw. als Ganzes einen Vielkant bzw. einen Hohlzylinder auf vieleckiger Grundfläche. Die Ecken bzw. Zylinderkanten sind hierbei jeweils den abstützenden Rippen zugeordnet, während die dazwischenliegenden Laufflächenbereiche nahezu eben sind. Die Verteilung der Angießpunkte über dem Umfang verstärkt oder überlagert diesen Effekt, da es jeweils im Bereich der Angießpunkte zu frühzeitiger Abkühlung und Erstarrung des Laufrings kommt, die sich ebenfalls auf den Schrumpfungsprozeß auswirken. Auch hierdurch entstehen Ecken bzw. Zylinderkanten am Rollenkörper in geringer Anzahl die den zuvor genannten Ecken und Zylinderkanten an den Rippen verstärkend überlagert sein können.

Diese Formgebung hat zur Folge, daß im Zugtrum des darüberlaufenden Riemens beim Abrollen über die Laufrolle periodische Längsbelastungen und damit periodische Dehnungen erzeugt werden, die zu erheblicher Geräuschbildung führen. Auch die Impulse beim Auftreffen der einzelnen Kanten des genannten Vielkants auf die Innenfläche des Riemens können akustische Anregungen zur Folge haben. Die Folgen sind insbesondere dann erheblich, wenn die Anregungsfrequenz des Zugtrums der des Riemenspannsystems entspricht, so daß Resonanz auftritt

Derartige Erscheinungen sind nicht akzeptabel, da sie unter Komfortgesichtspunkten stören und unter dem Gesichtspunkt der Betriebssicherheit die Lebensdauer des Riemens und der Laufrolle beeinträchtigen.

Hiervon ausgehend ist es Aufgabe der vorliegenden Erfindung, Laufrollen der genannten Art so zu verbessern, daß sie bei weiterhin einfacher und billiger Ausführung ein verbessertes schwächeres Anregungsverhalten zeigen.

Eine erste Lösung besteht darin, daß die Anzahl der Rippen auf beiden Seiten des Ringstegs jeweils durch eine Primzahl insbesondere größer gleich 7 gebildet wird. Hierbei wird insbesondere vorgeschlagen, daß die Anzahl der Rippen jeweils 29, 31 oder 37 ist.

Die Rippen auf beiden Seiten können gleiche Umfangslage haben oder insbesondere mittig gegeneinander versetzt sein.

Es hat sich überraschend gezeigt, daß allein durch diese einfache Maßnahme, bei der die äußere Lauffläche fertigungsbedingt immer noch eine vielkantige Gestalt hat, die Anregungen wesentlich geringer sind, da die geradzahligen Haupterreger-Ordnungen des Riemenspannsystems nicht getroffen werden. Mehrkosten gegenüber Laufrollen bekannter Art entstehen bei dieser Ausführung praktisch nicht, ebensowenig Gewichtsnachteile.

Eine zweite Lösung besteht darin, daß die Rippen auf beiden Seiten des Ringstegs gleiche Anzahl haben und relativ zueinander umfangsversetzt sind. Hierbei ist insbesondere vorgesehen, daß die Rippen auf einer Seite des Ringstegs gegenüber den Rippen auf der anderen Seite des Ringstegs um einen Bruchteil des Teilungswinkels nicht-mittig versetzt sind z.B. um ein Viertel des Teilungswinkels. Auch hierbei kann eine Primzahl für die Anzahl der Rippen auf beiden Seiten gewählt werden bevorzugt die bereits zuvor genannten Primzahlen.

Mit dieser einfachen Maßnahme wird die Vielkantigkeit gebrochen bzw. abgeschwächt, indem die Anzahl der Rippenanbindungen am Laufring über dem Umfang verdoppelt wird, wenn auch die Rippen jeweils nur die halbe Breite der Lauffläche unterstützen. Insgesamt entsteht jedoch eine Laufrolle mit verbesserter Rundheit der Lauffläche. Die günstigeren Eigenschaften in akustischer Hinsicht, die sich hieraus ergeben, sind ohne weiteres verständlich. Die Anregungen sind zahlreicher über dem Umfang, jedoch viel schwächer. Es findet eine Annäherung an die idealerweise rein zylindrische Lauffläche statt. Auch bei dieser Lösung ist speziell die Anzahl der Rippenpaare und der Angießpunkte als Primzahl bevorzugt.

Eine dritte Lösung besteht darin, daß die Anzahl der Rippen auf beiden Seiten des Ringstegs voneinander abweicht. Hierbei ist insbesondere vorgesehen, daß die Anzahl der Rippen auf beiden Seiten des Ringstegs wiederum Primzahlen bildet, die nahe beieinander liegen, insbesondere unmittelbar aufeinanderfolgende Primzahlen darstellen, z.B. 29 und 31. Auch mit dieser Maßnahme wird der Effekt des vieleckigen Querschnitts der Lauffläche teilweise gebrochen; zudem ändert sich ständig der Abstand der Rippenanordnungen am Laufring über dem Umfang um einen Differenzbetrag, so daß die Abflächungen der Lauffläche bzw. die Anregungen nicht periodisch sind. Es ergibt sich die gleiche Wirkung wie bei der zuvor beschriebenen Lösung.

Eine vierte Lösung schließlich besteht darin, daß die Teilungswinkel zwischen den Rippen über dem Umfang variabel sind. Hierbei ist vorgesehen, daß kleinere Teilungswinkel auf einer Seite des Ringstegs größeren Teilungswinkeln auf der anderen Seite des Ringstegs gegenüberliegen und umgekehrt, so daß trotz ungleichmäßiger Teilungswinkel über dem Umfang insgesamt eine allgemeine Symmetrie der Rolle erhalten bleibt. Auch mit dieser Lösung wird das Prinzip des Brechens der Periodizität verfolgt, indem der Laufring durch die auf dem Umfang ungleichförmig abstützenden Rippen zu einer reduzierten Anregung geführt wird, indem Resonanzerscheinungen vermieden werden. Auch hierbei kann die Rippenzahl auf beiden Seiten durch Primzahlen gebildet werden.

Wie schon eingangs erwähnt ein weiterer Nachteil bei Laufrollen der bekannten Art ist durch das Herstellverfahren bedingt, bei dem das Material über eine Anzahl umfangsverteilter Angießpunkte, z. B. an einer Stirnseite der Hohlnabe, in eine Form gespritzt wird. Hierdurch werden zusätzlich Abweichungen von der gewünschten Rundheit der Lauffläche im Sinne einer Vielkantform verursacht.

Nach einer günstigen Ausgestaltung aller vorgenannten Lösungen ist daher vorgesehen, daß die Anzahl der Angießpunkte eine Primzahl ist, wobei je nach Rollengröße und Rippenzahl 5, 7, 11 oder 17 über dem Umfang verteilte Angießpunkte bevorzugt werden. Auch hiermit wird ein Einschwingen, bzw. Resonanzerscheinnungen vermieden oder zumindest reduziert, obwohl die von der Schrumpfung verursachte Unrundheit des Laufrings prinzipiell weitergegeben ist.

Bevorzugte Ausführungsbeispiele der Erfindung sind in den Zeichnungen dargestellt und werden nachstehend beschrieben.

Figur 1 zeigt eine erfindungsgemäße Laufrolle in einer ersten Ausführung, wobei die Anzahl der Rippen eine Primzahl ist
a) in axialer Ansicht
b) in radialer Ansicht
c) in einem radialen Schnitt durch die Achse

Figur 2 zeigt eine erfindungsgemäße Laufrolle in einer zweiten Ausführung, wobei die Rippen auf beiden Seiten gegeneinander umfangsversetzt sind
a) in axialer Ansicht
b) in radialer Ansicht
c) in einem radialen Schnitt durch die Achse

Figur 3 zeigt eine erfindungsgemäße Laufrolle in einer dritten Ausführung, wobei Rippen auf beiden Seiten unterschiedliche Anzahl haben
a) in axialer Ansicht
b) in radialer Ansicht
c) in einem radialen Schnitt durch die Achse

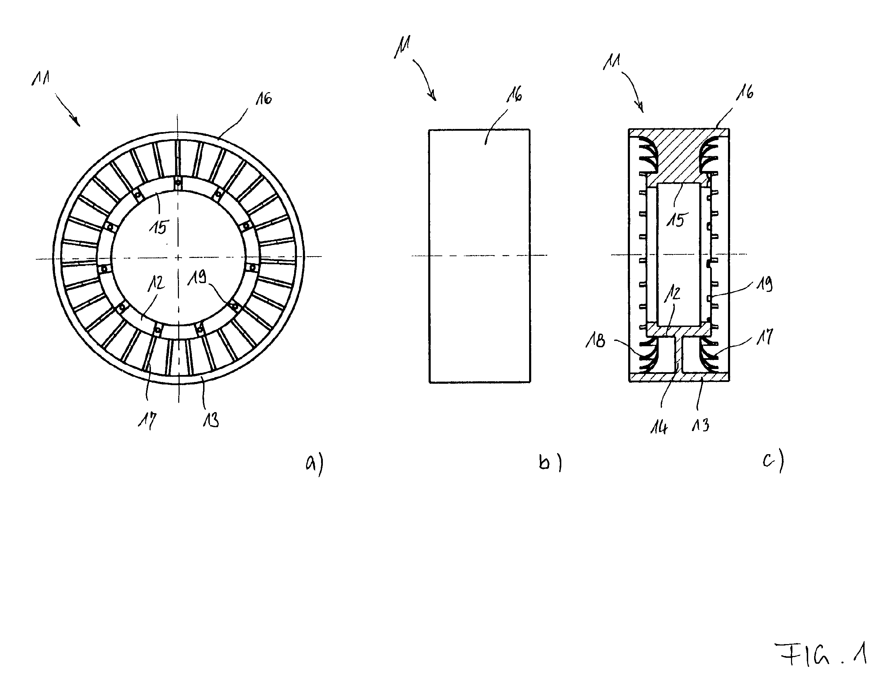

Die einzelnen Darstellungen der Figur 1 werden nachstehend gemeinsam beschrieben. Eine erfindungsgemäße Laufrolle 11 umfaßt eine ringzylindrische Hohlnabe 12, einen äußeren zylindrischen Laufring 13 sowie einen achsnormalen bzw. radialen Ringsteg 14, der die beiden vorgenannten Teile in symmetrischer Anordnung miteinander verbindet. Die Hohlnabe 12 bildet eine innere Sitzfläche 15 zur Aufnahme eines Wälzlagers, der Laufring 13 hat eine glatte zylindrische äußere Lauffläche 16, auf der ein Riemen eines Riemenspannsystems oder eines Umschlingungsgetriebes ablaufen kann. Die Laufrolle 11 ist im wesentlichen ortsfest, kann jedoch in einer elastischen Riemenspannvorrichtung mit Vorspannung nachgiebig gegenüber dem Riemen gehalten sein. Beidseitig des Ringsteges 14 sind umfangsverteilte radiale Rippen 17, 18 angeordnet, die homogen an der Innenseite des Laufrings 13, am Ringsteg 14 und an der Außenseite der Hohlnabe 12 angebunden sind. Die Laufrolle 11 besteht einheitlich aus Kunststoffmaterial.

Die Rippen 17, 18 sind in gleichmäßiger Umfangsverteilung paarweise auf beiden Seiten des Ringsteges angeordnet. Hierbei ist die Anzahl der Rippen 17, 18 jeweils übereinstimmend 31 und bildet damit eine Primzahl.

An einer der Stirnseiten der Hohlnabe 12 sind die bei der Herstellung verwendeten und entstandenen Anspriztpunkte 19 erkennbar, deren Anzahl 11, und damit ebenfalls eine Primzahl ist.

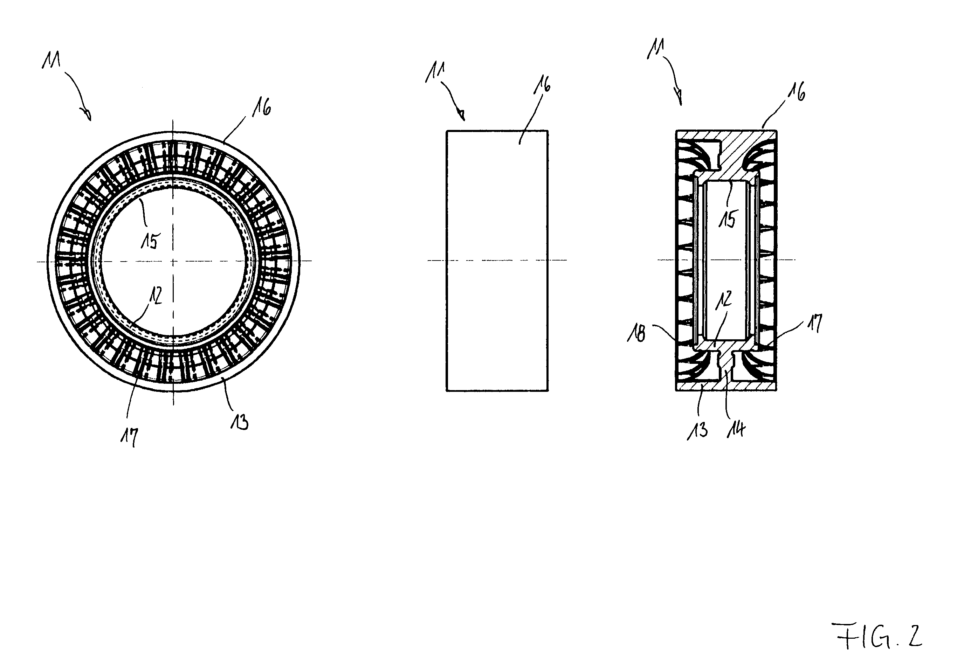

In Figur 2 sind gleiche Einzelheiten wie in Figur 1 mit gleichen Bezugsziffern bezeichnet. Auf die vorangehende Beschreibung wird insoweit Bezug genommen. Es wird im weiteren nur auf die unterschiedlichen Merkmale verwiesen. Im vorliegenden Fall sind bei gleicher Rippenform wie zuvor die Anzahlen der Rippen 17 und 18 untereinander gleich, nämlich 29, wobei jedoch die Rippen 17 um ein Viertel des Teilungswinkels gegenüber den Rippen 18 umfangsversetzt sind. Auch die Anzahl 29 stellt eine Primzahl dar.

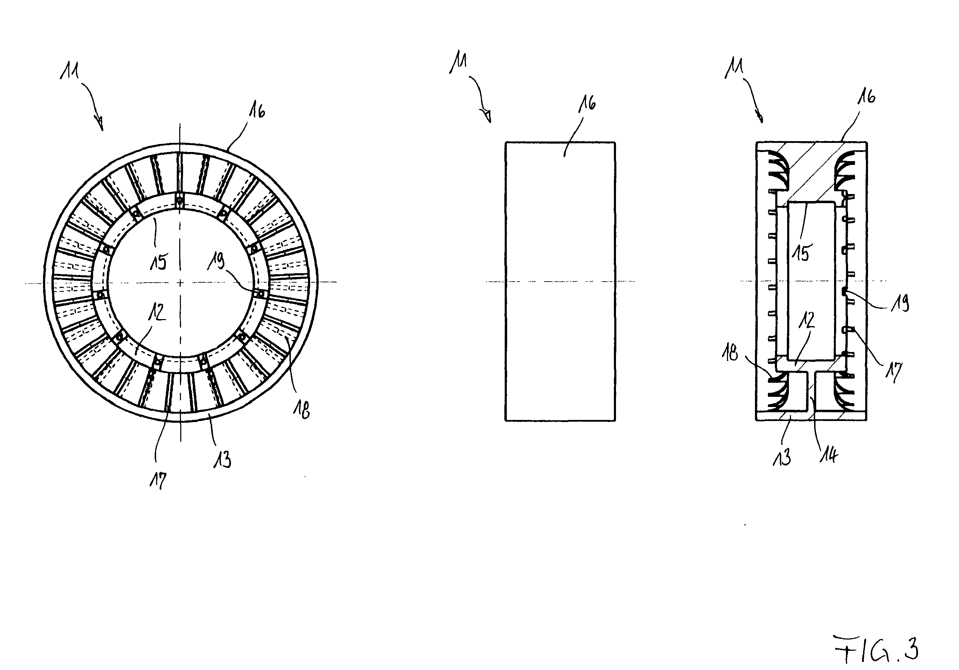

In Figur 3 sind gleiche Einzelheiten wie in Figur 1 mit gleichen Bezugsziffern belegt. Auf die vorangehende Beschreibung wird insoweit Bezug genommen. Abweichende Merkmale sind nachfolgend beschrieben. Die Rippen 17, 18 sind in gleichmäßiger Umfangsverteilung auf jeweils einer der Seiten des Ringsteges angeordnet, haben jedoch voneinander abweichende Anzahl. Damit haben die Rippen 17 gegenüber den Rippen 18 eine abweichenden Teilungswinkel. Im konkreten Fall ist die Anzahl der Rippen 17 im vorliegenden Fall 29 während die Anzahl der Rippen 18 mit 31 anzugeben ist. Auch hier sind 11 Anspritzpunkte 19 an einer Stirnseite der Hohlnabe 12 zu erkennen. Alle der genannten Anzahlen bilden somit Primzahlen.

Alle erfindungsgemäßen Ausführungsformen haben eine verbesserte Rundheit gegenüber Laufrollen bekannter Art, bei denen zu beiden Seiten des Ringsteges Rippen mit gleichem Teilungswinkel insbesondere in geradzahliger Anordnung jeweils in gleicher sich paarweise gegenüberliegender Anordnung ausgebildet sind, so daß die Lauffläche die Form eines deutlich ausgebildeten Vielkants annimmt. Demgegenüber weisen die erfindungsgemäßen Laufrollen, die zuvor beschrieben sind, eine verbesserte Rundheit und/ oder ein abgeschwächtes Anregungsverhalten auf.

### Bezugszeichenliste

- 11: Laufrolle
- 12: Hohlnabe
- 13: Laufring
- 14: Ringsteg
- 15: Sitzfläche
- 16: Lauffläche
- 17: Rippen
- 18: Rippen
- 19: Anspritzpunkt

## Patentansprüche

1. Laufrolle (11) für Riemenspannsysteme oder Umschlingungsgetriebe mit einer Hohlnabe (12) und einem zylindrischen Laufring (13), wobei Hohlnabe (12) und Laufring (13) durch einen Ringsteg (14) miteinander verbunden sind und die Hohlnabe (12) und der Laufring (13) beiderseits des Ringstegs (14) durch umfangsverteilte radial angeordnete Rippen (17, 18) gegeneinander abgestützt sind,
**dadurch gekennzeichnet,**
**daß** die Anzahl der Rippen (17, 18) auf beiden Seiten des Ringstegs (14) jeweils durch eine Primzahl gebildet wird.

2. Laufrolle nach Anspruch 1,
**dadurch gekennzeichnet,**
**daß** die Anzahl der Rippen 29, 31 oder 37 ist.

3. Laufrolle (11) für Riemenspannsysteme oder Umschlingungsgetriebe mit einer Hohlnabe (12) und einem zylindrischen Laufring (13), wobei Hohlnabe (12) und Laufring (13) durch einen Ringsteg (14) miteinander verbunden sind und die Hohlnabe (12) und der Laufring (13) beiderseits des Ringstegs durch umfangsverteilte radial angeordnete Rippen (17, 18) gegeneinander abgestützt sind,
**dadurch gekennzeichnet,**
**daß** die Rippen (17, 18) auf beiden Seiten des Ringstegs (14) gleiche Anzahl haben und relativ zueinander umfangsversetzt sind.

4. Laufrolle nach Anspruch 3,
**dadurch gekennzeichnet,**
**daß** die Rippen (17) auf einer Seite des Ringstegs gegenüber den Rippen (18) auf der anderen Seite des Ringstegs um einen Bruchteil des Teilungswinkels der Rippenanordnungen nicht-mittig versetzt sind.

5. Laufrolle (11) für Riemenspannsysteme oder Umschlingungsgetriebe mit einer Hohlnabe (12) und einem zylindrischen Laufring (13), wobei Hohlnabe (12) und Laufring (13) durch einen Ringsteg (14) miteinander verbunden sind und die Hohlnabe (12) und der Laufring (13) beiderseits des Ringstegs (14) durch umfangsverteilte radial angeordnete Rippen (17, 18) gegeneinander abgestützt sind,
**dadurch gekennzeichnet,**
**daß** die Anzahl der Rippen (17, 18) auf beiden Seiten des Ringstegs (14) voneinander abweicht.

6. Laufrolle nach Anspruch 5,
**dadurch gekennzeichnet,**
**daß** die Anzahl der Rippen (17, 18) auf beiden Seiten des Ringstegs (14) Primzahlen darstellt, insbesondere aufeinanderfolgende Primzahlen.

7. Laufrolle (11) für Riemenspannsysteme oder Umschlingungsgetriebe mit einer Hohlnabe (12) zur Aufnahme eines Lagers und einem zylindrischen Laufriemen (13), wobei Hohlnabe (12) und Laufring (13) durch einen Ringsteg (14) miteinander verbunden sind und die Hohlnabe und der Laufring beiderseits des Ringstegs durch umfangsverteilte radial angeordnete Rippen (17, 18) gegeneinander abgestützt sind,
**dadurch gekennzeichnet,**
**daß** die Teilungswinkel der Rippenanordnung zwischen den Rippen (17, 18) über dem Umfang variabel sind.

8. Laufrolle nach Anspruch 7,
**dadurch gekennzeichnet,**
**daß** kleinere Teilungswinkel auf einer Seite des Ringstegs (14) größeren Teilungswinkeln auf der anderen Seite des Ringstegs (14) gegenüberliegen und größere Teilungswinkel auf der einen Seite des Ringstegs (14) kleineren Teilungswinkeln auf der anderen Seite des Ringstegs (14) gegenüberliegen.

9. Laufrolle nach einem der Ansprüche 1 bis 8,
**dadurch gekennzeichnet,**
**daß** sie umfangsverteilte Angießpunkte (19) aus dem Herstellungsvorgang aufweist, deren Anzahl eine Primzahl ist.

10. Laufrolle nach Anspruch 9,
**dadurch gekennzeichnet,**
**daß** die Anzahl der Angießpunkte 5, 7, 11 oder 13 ist.
